# EUROPÄISCHE PATENTSCHRIFT

(11) **EP 3 344 449 B1**
(45) Veröffentlichungstag und Bekanntmachung des Hinweises auf die Patenterteilung: **18.09.2019**
(21) Anmeldenummer: 16745110.3
(22) Anmeldetag: 29.07.2016
(51) Int. Cl.: B32B 7/02, B32B 7/12, B32B 27/08, B32B 27/30, B32B 27/32, B32B 27/34, B29C 49/00, B29C 49/04, B29C 49/08

(54) **TIEFZIEHBARE SCHRUMPFFOLIE UND VERFAHREN ZU DEREN HERSTELLUNG**
THERMOFORMABLE SHRINK FILM AND METHOD FOR PRODUCTION THEREOF
FILM RÉTRACTABLE POUVANT SUBIR UN THERMOFORMAGE PROFOND ET PROCÉDÉ DE PRODUCTION CORRESPONDANT

(30) Priorität: 03.09.2015 DE 102015114782
(43) Veröffentlichungstag der Anmeldung: 11.07.2018
(73) Patentinhaber: Maria Soell High Technology Films GmbH, 63667 Nidda-Eichelsdorf (DE)
(72) Erfinder: MATTHIAS, Johannsen, 63667 Nidda-Eichelsdorf (DE)
(74) Vertreter: Dr. Meyer-Dulheuer & Partners LLP
(86) Internationale Anmeldenummer: PCT/EP2016/068204
(87) Internationale Veröffentlichungsnummer: WO 2017/036693

(56) Entgegenhaltungen:
- WO-A1-2011/083707
- DE-U1-202006 020 148
- US-A1- 2006 210 743

## Beschreibung

Die vorliegende Erfindung betrifft eine tiefziehbare Schrumpffolie aus einer coextrudierten Mehrschichtfolie mit guten Sauerstoff- und Wasserdampfbarriereeigenschaften, die insbesondere für die Verpackung von frischem Geflügel und Fleisch- oder Wurstwaren geeignet ist.

Heutzutage übliche polymerbasierte Verpackungsformen für den Endkundenbereich bei Lebensmitteln gehören zu einem großen Teil zu den zwei Gruppen der tiefgezogenen Verpackungen und der geschrumpften Vakuum-Verpackungen. Diese bieten als Vorteil im einen Fall die passgenaue und ansprechende Produktaufnahme und -präsentation und im anderen Fall einen verbesserten Produktschutz beispielsweise durch weniger Luft in der Verpackung und Verhinderung des Austretens von Produktflüssigkeit in Verpackungshohlräume. Seit einiger Zeit finden auch vermehrt Folien Einsatz, die beide Eigenschaften aufweisen, also sowohl tiefziehbar als auch schrumpfbar sind.

Für diese Verpackungsart werden zunächst Unterfolien zu einer in der Form dem zu verpackenden Lebensmittel angepassten Verpackungsschale tiefgezogen, dann die Schale mit dem Lebensmittel befüllt, vakuumiert und anschließend mit einer Oberfolie versiegelt. Nachdem überschüssige Folienüberstände entfernt worden sind, wird die Verpackung durch Schrumpfen in einem Heißwasserbad exakt der Kontur des Lebensmittels angepasst, sodass eine falten- und hohlraumfreie Verpackung entsteht, die das Produkt hauteng und mit höchster Siegelnahtfestigkeit umschließt. Die Lebensmittel werden so sicher, absolut hygienisch und mit deutlich verlängerter Haltbarkeitsdauer maschinell verpackt. Dank einer glasklaren Optik und optimalen Siegelnahtpositionierung gewährt die Folie dabei einen ungetrübten Blick auf die verpackten Produkte.

Dazu müssen den Folien jedoch eigentlich konträre Eigenschaften gegeben werden, nämlich für den zunächst erfolgenden Thermoformprozess die Fähigkeit, sich unter Erwärmung durch Dehnung in eine stabile Form bringen zu lassen, und für den dann folgenden Schrumpfungsvorgang die Fähigkeit, sich kontrolliert und gleichmäßig wieder zusammenzuziehen und das Verpackungsgut gleichmäßig und fest zu umschließen.

Aus dem Stand der Technik ist beispielsweise aus der WO 2011/083707 A1 eine schrumpfbare mehrschichtige Folie auf Polyamidbasis bekannt, die sich auch zum Tiefziehen eignet. Wesentliches Aufbaumerkmal der vorgeschlagenen dreischichtigen Folie ist ein Kern aus einer Mischung eines aliphatischen Polyamids mit einem Schmelzpunkt von mindestens 180 °C mit einem aromatischen amorphen Polyamid, wobei diese Zentrallage eine Dicke im Bereich von 25 % bis 50 % der Gesamtdicke der Folie einnehmen muss. Optional kann die Struktur noch mit einer Barriereschicht auf EVOH-Basis ergänzt werden, die über eine Haftvermittlerschicht auf einer der Seiten der Polyamidschicht angebracht wird.

Sowohl der angestrebte höhere Schmelzpunkt als auch der hohe Gesamtanteil der Polyamidschicht an der Folie sollen der Folie die angestrebte verbesserte Tiefziehfähigkeit verleihen. Außerdem wird der höhere Schmelzpunkt auch als essentiell für das Herstellungsverfahren bezeichnet, da sich unterhalb von 180 °C damit schon gar keine Folien produzieren lassen. Ferner wird für gute Tiefzieheigenschaften als Parameter der Folie definiert, dass deren Zugspannung bei 100 °C und 100 % Dehnung sich im Bereich von 3-22 N bewegen soll.

Unterhalb der beanspruchten Untergrenze von 25 % für den Anteil der Polyamidschicht an der Gesamtfoliendicke beschreibt die Anmeldung das Auftreten von erheblichen Dickeschwankungen beim Verstrecken der Folie im Herstellungsprozess und Schwierigkeiten beim Erreichen einer guten Tiefziehfähigkeit.

Ähnliche Probleme treten jedoch auch beim Tiefziehen der Folien auf. Die offenbarten Folien zeigen trotz schon verbesserter Tiefziehfähigkeit noch immer das Problem, dass besonders beim Tiefziehen in relativ tiefe Formen, wofür eine gute und vor allem gleichmäßige Dehnfähigkeit der Folie benötigt wird, Dickenschwankungen im ausgezogenen Material auftreten und insbesondere die Ecken und Kanten der Form zu Dünnstellen neigen.

Zudem zeigen die offenbarten Folien eine höhere Dehnfähigkeit in Maschinenrichtung, was sie eher für längliche Verpackungsgüter geeignet macht, die in Querrichtung unter Schrumpfung verpackt werden. Gerade bei größeren Würsten oder länglichen Fleischteilen ist es jedoch oftmals günstiger, diese in Maschinenrichtung zu verpacken, da man so variabler in der Länge der Verpackung ist.

Die Aufgabe der vorliegenden Erfindung war es ausgehend vom Stand der Technik daher, eine tiefziehbare und wärmeschrumpfbare Folie zur Verfügung zu stellen, die sich durch ein verbessertes Tiefziehverhalten auszeichnet, wobei sich die für die Verpackung relevanten Barriereeigenschaften bezüglich Sauerstoff und Wasserdampf sowie die Durchstoßfestigkeit auf einem zumindest sehr guten Niveau bewegen sollen. Das verbesserte Tiefziehverhalten sollte sich vor allem in einem gleichmäßigeren Ausziehen der Folie beim Tiefziehprozess und verringerten Dünnstellen manifestieren. Ein weiterer Aspekt der Erfindung betrifft die besondere Auslegung der Folie für die Verpackung von länglichen Packgütern in Maschinenrichtung.

Gelöst wird diese Aufgabe durch eine tiefziehbare und wärmeschrumpfbare Mehrschichtfolie mit mindestens neun Schichten, deren Schichten von außen nach innen die folgende Zusammensetzung umfassen:
(1) 60-40 Vol.-% Polyamid (PA), 40-60 Vol.-% amorphes Polyamid (aPA)
(2) 100 Vol.-% Haftvermittler
(3) 100 Vol.-% teilneutralisiertes Ethylen-(Meth)acrylsäure-Copolymer (lonomer)
(4) 100 Vol.-% Haftvermittler
(5) 60-40 Vol.-% Polyamid (PA), 40-60 Vol.-% amorphes Polyamid (aPA)
(6) 100 Vol.-% Ethylen-Vinylalkohol-Copolymer (EVOH)
(7) 60-40 Vol.-% Polyamid (PA), 40-60 Vol.-% amorphes Polyamid (aPA)
(8) 100 Vol.-% Haftvermittler
(9) 70-40 Vol.-% Polyethylen niedriger Dichte (LDPE), 30-60 Vol.-% lineares Polyethylen niedriger Dichte (LLDPE)

Dabei ist die Dicke der lonomer Schicht (3) größer als die Summe der Dicken der PA/aPA-Blend Schichten (5) und (7) und die Dicke der Haftvermittler Schichten (4) und (8) beträgt jeweils mindestens 5 % der Gesamtfoliendicke.

Für die Erzielung der verbesserten Tiefziehfähigkeit hat es sich als wesentlich herausgestellt, dass die lonomer Schicht dicker ist als die beiden PA/aPA-Blend Schichten, die die EVOH Schicht einschließen, zusammen. Erst bei diesem hohen Anteil an lonomer wird trotz hoher Dehnfähigkeit der Folie eine gleichmäßige Dehnung beim Tiefziehen realisiert. Andernfalls neigt die Folie dazu, in tiefer ausgezogenen Kanten und Ecken Dünnstellen zu bilden, die dann leicht zu Undichtigkeiten der fertigen Verpackung führen. Vorzugsweise ist die lonomer Schicht sogar dicker als diese drei Schichten zusammen.

Ebenso ist es sowohl für die Tiefzieh- und Barriereeigenschaften der fertigen Folie als auch für das Verhalten bei deren Herstellung wesentlich, dass keine Schichten aus reinem teilkristallinen Polyamid in der Folie enthalten sind, sondern immer ein Blend aus einem teilkristallinen Polyamid und einem amorphen Polyamid. Eine Außenschicht aus einem reinen aliphatischen Polyamid würde bei der beanspruchten Folienrezeptur zu Dehungsstreifen beim Tiefziehen führen, während der erfindungsgemäße PA/aPA-Blend weder Dehnungsstreifen bildet noch die bei Polyesteraußenlagen an stärker tiefgezogenen Bereichen auftretenden Besenreißer.

Das Mischungsverhältnis von LDPE und LLDPE in der Siegelschicht (9) ist unter Berücksichtigung der gewünschten Siegeleigenschaften innerhalb des beanspruchten Bereiches zu wählen, wobei jedoch die Verfahrensbedingungen im Thermoformer vorrangig ausschlaggebend sind, da darauf zu achten ist, dass die Siegelschicht nicht unter den dortigen Bedingungen bereits zu schmelzen beginnt.

Vorzugsweise weisen die Schichtdicken der Schichten (1) bis (9) bezogen auf die Gesamtdicke der Folie die folgenden Werte auf:

| Schicht | (1) | (2) | (3) | (4) | (5) | (6) | (7) | (8) | (9) |
|---|---|---|---|---|---|---|---|---|---|
| Dicke [%] | 2-5 | 4-6 | 19-27 | 5-7 | 5-10 | 8-10 | 5-10 | 5-7 | 30-40 |

Die Dicke der den PA/EVOH/PA Barriereblock umgebenden Haftvermittlerschichten (4) und (8) beträgt jeweils bevorzugt 5-7 %, besonders bevorzugt 6-7 % der Gesamtdicke, um sicher zu stellen, dass deren Dicke auch in der tiefgezogenen Folie noch ausreichend groß ist, um das Auftreten von Dehnungsstreifen und ein Delaminieren zu verhindern.

Vorteilhafterweise wird die erfindungsgemäße Mehrschichtfolie derart biaxial gereckt und thermofixiert, dass ihr Schrumpf S bei einer Verweilzeit von 5 s in einem Wasserbad von 90 °C sowohl in Maschinenrichtung (MD) als auch in Querrichtung (TD) 10 % ≤ S ≤ 20 % beträgt.

Bei dem Haftvermittler handelt es sich vorzugsweise um ein mit Maleinsäureanhydrid gepfropftes LLDPE.

Bevorzugt wird als amorphes Polyamid ein Polyamid 6I/6T (Copolymer aus Hexamethylendiamin / Isophthalsäure und Hexamethylendiamin / Terephthalsäure) eingesetzt.

Ferner ist es eine vorteilhafte Gestaltungsvariante der Erfindung, wenn es sich bei dem Polyamid, das in den Innenlagen (5) und (7) verwendet wird, um ein PA 6, PA 66 oder PA 6/66 handelt und in der Außenlage (1) ein PA 6/66 eingesetzt wird.

Die Herstellung der erfindungsgemäßen tiefziehbaren und wärmeschrumpfbaren Mehrschichtfolie erfolgt erfindungsgemäß im Blasfolien-Coextrusionsverfahren mit biaxialer Reckung und Thermofixierung in drei Blasen und umfasst die folgenden Schritte:
a. Coextrusion einer Folie mit einem erfindungsgemäßen Aufbau und einer erfindungsgemäßen Zusammensetzung mittels einer ersten Blase zu einem Schlauch;
b. Abkühlen und Flachlegen des Schlauchs auf eine Temperatur von unter 30 °C mit Wasser einer Temperatur von 10 - 20 °C;
c. Erwärmen des flachgelegten Schlauches in einem Wasserbad einer Temperatur von 85 - 98 °C;
d. Aufblasen und Verstrecken des erwärmten Schlauches zu einer zweiten Blase mit einem Aufblasverhältnis von 2,1 bis 2,7 und einem Längsreckverhältnis von 2,1 bis 2,6;
e. Aufblasen des Schlauches zu einer dritten Blase zur Thermofixierung unter Erwärmung der Folie auf eine Oberflächentemperatur von 70 - 85 °C und Relaxation der Folie in Querrichtung um 15 - 30 % und in Längsrichtung um 10-20%.

Besonders bevorzugt beträgt die Temperatur des Wasserbads in Schritt c. 90-95 °C.

Das Aufblasverhältnis beträgt besonders bevorzugt 2,2 bis 2,6 und das Längsreckverhältnis 2,2 bis 2,5.

Besonders bevorzugt erfolgt in Schritt e. die Relaxation der Folie in Querrichtung um 20 - 25 % und in Längsrichtung um 13 - 16 %.

### Beispiele

Für die Herstellung der Folien der Beispiele wurden die folgenden Rohstoffe eingesetzt:

| | |
|---|---|
| Haftvermittler: | Als Haftvermittler wurde Admer® NF911, ein Maleinsäureanhydrid-gepfropftes LLDPE, des Herstellers Mitsui mit einem MFI von 2,5 g / 10 min (190 °C / 2,16 kg) und einer Dichte von 0,9 g / cm³ verwendet. |
| | |
| lonomer: | Bei dem lonomer handelt es um das Produkt Surlyn® 1601 der Firma DuPont® de Nemours mit einer Dichte von 0,94 g/cm³ und einem MFI von 1,3 g / 10 min (190 °C / 2,16 kg). |
| | |
| PA 6: | Als PA-Komponente der Innenlagen wurde ein unter dem Namen Ultramid® B40L vertriebenes Polyamid 6 mit einer Dichte von 1,12 - 1,15 g / cm³ (gemessen nach ISO 1183) und einer relativen Viskosität von 3,89 - 4,17 (1 % in 96 %-iger Schwefelsäure, gemessen nach ISO 307, berechnet nach Huggins) der Firma BASF SE verwendet, dessen Schmelzpunkt 220 °C (gemessen nach ISO 3146) beträgt. |
| | |
| PA 6/66: | Als PA-Komponente der Außenlage wurde ein Polyamid 6/66 verwendet, das von der Firma BASF SE unter der Bezeichnung Ultramid® C40L mit einer Dichte von 1,12 g/cm³ (gemessen nach ISO 1183), einer relativen Viskosität von 3,89 - 4,17 (1 % in 96 %-iger Schwefelsäure, gemessen nach ISO 307, berechnet nach Huggins) und einem Schmelzpunkt von 193 °C (gemessen nach ISO 3146) vertrieben wird. |
| | |
| aPA: | Beim amorphen Polyamid handelt es sich um ein Polyamid 6I/6T (Copolymer aus Hexamethylendiamin / Isophthalsäure und Hexamethylendiamin / Terephthalsäure) des Typs Grivory® G21 von der EMS-Chemie AG mit einer Dichte von 1,18 g/cm³ und einer MVR von 21,1 ml/10 min (275 °C / 5 kg). |
| | |
| EVOH: | Das von der Nippon Gohsei Europe GmbH hergestellte Ethyl-en/Vinylalkohol-Copolymer Soarnol™ AT4403 weist einen Ethylen-Anteil von 44 % auf und hat einen MFI von 3,5 g / 10 min (190 °C / 2,16 kg) sowie eine Dichte von 1,14 g / cm³. |
| | |
| LDPE: | Als LDPE-Komponente wurde das Hochdruck-Polyethylen Lupolen® 2420 H von LyondeIIBaseII Industries mit einer Dichte von 0,924 g/cm³ und mit einem MFI von 1,9 g / 10 min (190 °C / 2,16 kg) eingesetzt. |
| | |
| LLDPE: | Als LLDPE kam das metallocenkatalysierte Polyolefin Plastomer (POP) Affinity™ PL1880G des Herstellers Dow Chemicals zum Einsatz, welches eine Dichte von 0,902 g / cm³ und einen MFI von 1,0 g / 10 min (190 °C / 2,16 kg) hat. |

Die Herstellung der Folien erfolgte im Blasfolien-Coextrusionsverfahren mit drei Blasen. Dabei wurde der Vorschlauch der ersten Blase mit Wasser von 14 °C auf eine Temperatur von ca. 25 °C gekühlt. Das anschließende Aufheizen des Schlauchs vor der zweiten Blase wurde im Wasserbad von 95 °C durchgeführt. Das Aufblasverhältnis in der zweiten Blase betrug 2,4 bei einer Längsreckung von 2,3. Bei der Thermofixierung in der dritten Blase wurde eine Relaxation der Folie in Längsrichtung um 14 % und in Querrichtung um 25 % bei einer Thermofixiertemperatur von ca. 77 °C auf der Folienoberfläche erzielt.

Die Folien wurden auf einer 11-Schicht-Anlage produziert. Daher setzen sich die (Funktions-)Schichten (3) und (9) jeweils aus zwei identischen Schichten a und b zusammen, welche in den nachfolgenden Tabellen aufgeführt sind.

### Beispiel 1

Die Gesamtdicke der hergestellten Folie beträgt 60 µm.

| Schicht | Dicke | | Zusammensetzung |
|---|---|---|---|
| | [µm] | [%] | |
| (1) | 1,8 | 3 | 60 Vol.-% PA 6/66 + 40 Vol.-% aPA |
| (2) | 3,0 | 5 | Haftvermittler |
| (3) a+b | 10,8 + 3,0 | 18 + 5 | Ionomer |
| (4) | 3,6 | 6 | Haftvermittler |
| (5) | 3,0 | 5 | 60 Vol.-% PA 6 + 40 Vol.-% aPA |
| (6) | 6,0 | 10 | EVOH |
| (7) | 3,0 | 5 | 60 Vol.-% PA 6 + 40 Vol.-% aPA |
| (8) | 3,6 | 6 | Haftvermittler |
| (9) a+b | 6,0 + 16,2 | 10 + 27 | 70 Vol.-% LDPE + 30 Vol.-% LLDPE (mPE) |
| gesamt | 60 | 100 | |

### Beispiel 2

Die Gesamtdicke der hergestellten Folie beträgt 90 µm.

| Schicht | Dicke | | Zusammensetzung |
|---|---|---|---|
| | [µm] | [%] | |
| (1) | 2,7 | 3 | 60 Vol.-% PA 6/66 + 40 Vol.-% aPA |
| (2) | 4,5 | 5 | Haftvermittler |
| (3) a+b | 18,0 + 4,5 | 20 + 5 | Ionomer |
| (4) | 5,4 | 6 | Haftvermittler |
| (5) | 4,5 | 5 | 60 Vol.-% PA 6 + 40 Vol.-% aPA |
| (6) | 7,2 | 8 | EVOH |
| (7) | 4,5 | 5 | 60 Vol.-% PA 6 + 40 Vol.-% aPA |
| (8) | 5,4 | 6 | Haftvermittler |
| (9) a+b | 9,0 + 24,3 | 10 + 27 | 70 Vol.-% LDPE + 30 Vol.-% LLDPE (mPE) |
| gesamt | 90 | 100 | |

Als Vergleichsbeispiel mit dem Stand der Technik diente eine tiefziehfähige Schrumpffolie des Herstellers Krehalon Industrie B. V. des Typs Krehalon FS90-M No. 9, die eine Stärke von 90 µm und Hochbarriere-Eigenschaften aufweist.

### Messmethoden

Der Schrumpfgrad in Maschinenrichtung (MD) und Querrichtung (TD) wurde durch Eintauchen einer 100 mm x 100 mm großen Folienprobe für 5 s in ein Wasserbad mit einer Temperatur von 90 °C in Anlehnung an DIN EN ISO 11501 bestimmt.

Die Zug-Dehnungs-Messungen erfolgten nach DIN EN ISO 527-3 im Normklima bei 23 °C und 50 % rel. Feuchte bestimmt.

Die Durchstoßfestigkeit wurde nach DIN 53373 im Normklima bei 23 °C und 50 % rel. Feuchte bestimmt.

Die Sauerstoffdurchlässigkeit wurde nach DIN 53380-3 bei 23 °C und 0 % relativer Feuchte gemessen.

Die Wasserdampfdurchlässigkeit wurde nach DIN EN ISO 15106-2 bei 23 °C und 85 % relativer Feuchte gemessen.

In der folgenden Tabelle sind die Eigenschaften der erfindungsgemäßen Folien denen der Vergleichsfolie gegenübergestellt.

| | | Beispiel 1 | Beispiel 2 | Vergleichsbeispiel |
|---|---|---|---|---|
| Zugfestigkeit | MD | 51,5 | 49,0 | 41,6 |
| [N/mm²] | TD | 33,3 | 37,0 | 45,1 |
| Reißdehnung | MD | 135 | 122 | 180 |
| [%] | TD | 148 | 185 | 121 |
| Schrumpf | MD | 14 | 16 | 10 |
| [%] | TD | 12 | 12 | 19 |
| Durchstoßfestigkeit [N] | | 9,2 | 16,3 | 12,0 |
| Sauerstoffdurchlässigkeit [cm³/(m²·d·bar)] | | 6,6 | 4,2 | 11,0 |
| Wasserdampfdurchlässigkeit [g/(m²·d)] | | 2,4 | 1,4 | 4,0 |

Im direkten Vergleich des Beispiels 2 mit dem Vergleichsbeispiel gleicher Dicke zeigt die erfindungsgemäße Folie eine auf gleichem Niveau liegende Reißdehnung, wobei die Richtung der höheren Dehnfähigkeit aufgabengemäß in Querrichtung statt in Maschinenrichtung vorliegt. Ein längliches Verpackungsgut, das in Maschinenrichtung verpackt werden soll, lässt sich somit besser verpacken. Die besonders für die Verpackung von z. B. knochenhaltigem Fleisch wichtige Durchstoßfestigkeit erreicht dabei um rund 25 % bessere Werte. Die Barriereeigenschaften sind sehr gut und übertreffen die der Vergleichsfolie um 60-65 %. Demgegenüber ist ein Abfall von ca. 10 % in der Zugfestigkeit in Querrichtung im Vergleich zur Maschinenrichtung der Vergleichsfolie zu beobachten, allerdings übertrifft sie in Maschinenrichtung die Querrichtung der Vergleichsfolie ebenfalls um ca. 10 %. Der etwas niedrigere tiefste Absolutwert in der Zugfestigkeit ist jedoch für den Anwendungsfall der Schrumpfverpackungen gegenüber der Durchstoßfestigkeit von untergeordneter Bedeutung, da es dabei mehr darauf ankommt, eine Perforation der Verpackung durch Knochen oder andere spitze oder scharfkantige Teile des Packguts von innen zu verhindern, während an der fertigen befüllten Verpackung sowie bei deren Herstellung aus der Ausgangsfolie kaum Zugkräfte auftreten.

### Tiefziehversuche

Zur Überprüfung der praktischen Eignung zum Tiefziehen wurden Folien in 90 µm Stärke von Beispiel 2 und dem Vergleichsbeispiel zum Tiefziehen einer Schale eingesetzt. Dabei kam eine Anlage der Firma Sealpac GmbH zum Einsatz. Die Folien wurden bei einer Thermoformtemperatur von 115 °C tiefgezogen.

Die folgende Tabelle zeigt die Auswertung eines Vergleichs der Dünnstellen einer tiefgezogenen Schale mit den Maßen 440 mm x 300 mm x 140 mm (L x B x T). Gemessen wurden jeweils die dünnsten vier Stellen.

| Messpunkt | Beispiel 2 | Vergleichsbeispiel |
|---|---|---|
| 1 | 34,5 µm | 31,0 µm |
| 2 | 34,5 µm | 29,0 µm |
| 3 | 34,5 µm | 31,5 µm |
| 4 | 37,0 µm | 28,0 µm |
| Mittelwert | 35,1 µm | 29,9 µm |

In einem zweiten Versuch wurde in einer Tiefziehform der Maße 440 mm x 220 mm x 140 mm (L x B x T) wiederum eine Schale gezogen und der Mittelwert aus den Dünnstellen gebildet. Dies ergab eine erhöhte Restdicke in den Dünnstellen von 33 µm (Beispiel 2) gegenüber 30 µm (Vergleichsbeispiel).

Wie sich aus den beiden Versuchen erkennen lässt, zeigt die erfindungsgemäße Folie eine gleichmäßigere Dicke nach dem Tiefziehen. Die Dünnstellen sind sowohl insgesamt dicker als bei dem Vergleichsbeispiel als auch mit einer geringeren Streuung versehen. Dies wirkt sich positiv auf die Dichtigkeit und Strapazierfähigkeit der Verpackung aus, da es gerade an diesen kritischen Stellen leicht zur Lochbildung kommen kann.

## Patentansprüche

1. Tiefziehbare und wärmeschrumpfbare Mehrschichtfolie mit mindestens neun Schichten, deren Schichten von außen nach innen die folgende Zusammensetzung umfassen:
(1) 60-40 Vol.-% Polyamid (PA), 40-60 Vol.-% amorphes Polyamid (aPA);
(2) 100 Vol.-% Haftvermittler;
(3) 100 Vol.-% teilneutralisiertes Ethylen-(Meth)acrylsäure-Copolymer (Io-nomer);
(4) 100 Vol.-% Haftvermittler;
(5) 60-40 Vol.-% Polyamid (PA), 40-60 Vol.-% amorphes Polyamid (aPA);
(6) 100 Vol.-% Ethylen-Vinylalkohol-Copolymer (EVOH);
(7) 60-40 Vol.-% Polyamid (PA), 40-60 Vol.-% amorphes Polyamid (aPA);
(8) 100 Vol.-% Haftvermittler;
(9) 70-40 Vol.-% Polyethylen niedriger Dichte (LDPE), 30-60 Vol.-% lineares Polyethylen niedriger Dichte (LLDPE);
wobei die Dicke der lonomer Schicht (3) größer als die Summe der Dicken der PA/aPA-Blend Schichten (5) und (7) ist und die Dicke der Haftvermittler Schichten (4) und (8) jeweils mindestens 5 % der Gesamtfoliendicke beträgt.

2. Tiefziehbare und wärmeschrumpfbare Mehrschichtfolie nach Anspruch 1, **dadurch gekennzeichnet, dass** die Schichtdicken der Schichten (1) bis (9) bezogen auf die Gesamtdicke der Folie die folgenden Werte aufweisen:
| Schicht | (1) | (2) | (3) | (4) | (5) | (6) | (7) | (8) | (9) |
|---|---|---|---|---|---|---|---|---|---|
| Dicke [%] | 2-5 | 4-6 | 19-27 | 5-7 | 5-10 | 8-10 | 5-10 | 5-7 | 30-40 |

3. Tiefziehbare und wärmeschrumpfbare Mehrschichtfolie nach einem der vorhergehenden Ansprüche, **dadurch gekennzeichnet, dass** sie derart biaxial gereckt und thermofixiert wurde, dass der Schrumpf S (5 s, Wasserbad, 90 °C, gemäss DIN EN ISO11501) der Mehrschichtfolie sowohl in Maschinenrichtung (MD) als auch in Querrichtung (TD) 10 % ≤ S ≤ 20 % beträgt.

4. Tiefziehbare und wärmeschrumpfbare Mehrschichtfolie nach einem der vorhergehenden Ansprüche, **dadurch gekennzeichnet, dass** der Haftvermittler ein mit Maleinsäureanhydrid gepfropftes LLDPE ist.

5. Tiefziehbare und wärmeschrumpfbare Mehrschichtfolie nach einem der vorhergehenden Ansprüche, **dadurch gekennzeichnet, dass** es sich bei dem amorphen PA um ein Polyamid 6I/6T (Copolymer aus Hexamethylendiamin / Isophthalsäure und Hexamethylendiamin / Terephthalsäure) handelt.

6. Tiefziehbare und wärmeschrumpfbare Mehrschichtfolie nach einem der vorhergehenden Ansprüche, **dadurch gekennzeichnet, dass** es sich bei dem Polyamid in den Innenlagen (5) und (7) um ein PA 6, PA 66 oder PA 6/66 und in der Außenlage (1) um ein PA 6/66 handelt.

7. Verfahren zur Herstellung einer tiefziehbaren und wärmeschrumpfbaren Mehrschichtfolie gemäß einem der vorhergehenden Ansprüche im Blasfolien-Coextrusionsverfahren mit biaxialer Reckung und Thermofixierung in drei Blasen, **dadurch gekennzeichnet, dass** sie die folgenden Schritte umfasst:
a. Coextrusion einer Folie mit einem Aufbau und einer Zusammensetzung nach Anspruch 1 mittels einer ersten Blase zu einem Schlauch;
b. Abkühlen und Flachlegen des Schlauchs auf eine Temperatur von unter 30 °C mit Wasser einer Temperatur von 10 - 20 °C;
c. Erwärmen des flachgelegten Schlauches in einem Wasserbad einer Temperatur von 85 - 98 °C;
d. Aufblasen und Verstrecken des erwärmten Schlauches zu einer zweiten Blase mit einem Aufblasverhältnis von 2,1 bis 2,7 und einem Längsreckverhältnis von 2,1 bis 2,6;
e. Aufblasen des Schlauches zu einer dritten Blase zur Thermofixierung unter Erwärmung der Folie auf eine Oberflächentemperatur von 70 - 85 °C und Relaxation der Folie in Querrichtung um 15 - 30 % und in Längsrichtung um 10 - 20 %.

## Claims

1. Deep-drawable shrink film with at least 9 layers, the layers of which comprise the following composition from the outside to the inside:
(1) 60-40 Vol.-% polyamide (PA), 40-60 vol. % amorphous polyamide (aPA);
(2) 100 Vol. % adhesion promoter;
(3) 100 Vol. % partially neutralized ethylene (meth) acrylic acid copolymer (Io-nomer),
(4) 100 Vol. % adhesion promoter;
(5) 60-40 Vol. % polyamide (PA), 40-60 Vol % amorphous polyamide (aPA),
(6) 100 Vol. % ethylene-vinyl alcohol-copolymer (EVOH);
(7) 60-40 Vol. % polyamide (PA), 40-60 vol. % amorphous polyamide (aPA),
(8) 100 Vol. % adhesion promoter;
(9) 70-40 Vol. % low density polyethylene (LDPE), 30-60 vol. % linear low density polyethylene (LLDPE);
Whereby the thickness of the ionomer layer (3) is greater than the sum of the thicknesses of the of the PA /aPA blend layers (5) and (7) and the thickness of the adhesion promoter layers (4) and (8) is in each case at least 5% of the total film thickness.

2. Deep-drawable heat-swelled multilayer film in accordance with claim 1, **characterized in that** the layer thicknesses of the layers (1) to 9), based on the total thickness of the film, feature the following values:
| Layer | (1) | (2) | (3) | (4) | (5) | (6) | (7) | (8) | (9) |
|---|---|---|---|---|---|---|---|---|---|
| Thickness [%] | 2-5 | 4-6 | 19-27 | 5-7 | 5-10 | 8-10 | 5-10 | 5-7 | 30-40 |

3. Deep-drawn and heat-swelled multilayer film according to one of the preceding claims, **characterized in such a way** that it was biaxially stretched and heat-set in such a way that the shrinkage S (5s, water bath, 90°C), according to DIN EN ISO 11501), the multilayer film can be applied both in the machine direction (MD) as well as in the transverse direction (TD) is 10% ≤ S ≤ 20%.

4. Deep-drawn and heat-swelled multilayer film according to one of the preceding claims, **characterized in that** the adhesion promoter is an LLDPE grafted with maleic anhydride.

5. Deep-drawn and heat-swelled multilayer film according to one of the preceding claims, **characterized in that** the amorphous PA is a polyamide 6I/6T (copolymer of hexamethylene diamine/isophthalic acid and hexamethylenediamine/terephthalic acid).

6. Deep-drawn and heat-swelled multilayer film according to one of the preceding claims, **characterized in that** the polyamide in the inner layers (5) and (7) around a PA 6, PA 66 or PA 6/66 and in the outer layer (1) is a PA 6/66.

7. Process for producing a deep-drawable and heat-shrinkable multilayer film according to one of the preceding claims in a bubble-blown coextrusion process with biaxial stretching and heat-setting into three bubbles, **characterized in that** it comprises the following steps:
a. a coextrusion of a film with a structure and a composition according to claim 1 by means of a first bubble to a tube;
b. cooling and laying the tube flat to a temperature of less than 30°C with water at a temperature of 10-20°C;
c. heating the flattened tube in a water bath at a temperature of 85-98°C;
d. blowing up and stretching the heated tube to form a second bubble with an inflation of 2.1 to 2.7 and a longitudinal stretching ration of 2.1 to 2.6;
e. the film is blown to a third bubble for thermal fixing while heating the film to a surface temperature of 70-85°C and relaxation of the film in the transverse direction by 15-30% and in the longitudinal direction by 10-20%.

## Revendications

1. Film multicouche emboutissable et thermorétractable avec au moins neuf couches, lesquelles comprennent, de l'extérieur vers l'intérieur, la composition suivante :
(1) 60 % à 40 % en volume de polyamide (PA), 40 % à 60 % en volume de polyamide amorphe (aPA) ;
(2) 100 % en volume de matériau adhésif;
(3) 100 % en volume d'un copolymère d'éthylène-(méth)acrylique (ionomère) partiellement neutralisé ;
(4) 100 % en volume de matériau adhésif;
(5) 60 % à 40 % en volume de polyamide (PA), 40 % à 60 % en volume de polyamide amorphe (aPA) ;
(6) 100 % en volume de copolymère d'éthylène-alcool vinylique (EVOH) ;
(7) 60 % à 40 % en volume de polyamide (PA), 40 % à 60 % en volume de polyamide amorphe (aPA) ;
(8) 100 % en volume de matériau adhésif ;
(9) 70 % à 40 % en volume de polyéthylène basse densité (LDPE), 30 % à 60 % en volume de polyéthylène linéaire basse densité (LLDPE) ;
où l'épaisseur de la couche d'ionomère (3) est supérieure à la somme de l'épaisseur des couches (5) et (7), comprenant le mélange de polyamide (PA) et polyamide amorphe (aPA), et l'épaisseur de chacune des couches de matériau adhésif (4) et (8), correspond au moins à 5 % de l'épaisseur totale du film.

2. Film multicouche emboutissable et thermorétractable selon la revendication 1, **caractérisé en ce que**, l'épaisseur des couches (1) à (9) ont les valeurs suivantes par rapport à l'épaisseur totale du film ;
| Couche | (1) | (2) | (3) | (4) | (5) | (6) | (7) | (8) | (9) |
|---|---|---|---|---|---|---|---|---|---|
| Épaisseur [%] | 2-5 | 4-6 | 19-27 | 5-7 | 5-10 | 8-10 | 5-10 | 5-7 | 30-40 |

3. Film multicouche emboutissable et thermorétractable selon l'une quelconque des revendications précédentes, **caractérisé en ce que**, le film est biaxialement étiré et thermorégulé de la sorte que le retrait S (5s, bain d'eau à 90°C, selon la norme DIN EN ISO11501) du film multicouche, autant dans la direction machine (MD) que dans la direction transversale (TD), est égal à 10 % ≤ S ≤ 20 %.

4. Film multicouche emboutissable et thermorétractable selon l'une quelconque des revendications précédentes, **caractérisé en ce que**, le matériau adhésif est un LLDPE greffé par l'anhydride maléique.

5. Film multicouche emboutissable et thermorétractable selon l'une quelconque des revendications précédentes, **caractérisé en ce que**, le polyamide amorphe est un polyamide 61 / 6T (copolymère constitué d'hexaméthylènediamine / acide isophtalique et d'hexaméthylènediamine / acide téréphtalique).

6. Film multicouche emboutissable et thermorétractable selon l'une quelconque des revendications précédentes, **caractérisé en ce que**, les polyamides des couches intérieures (5) et (7) sont les PA 6, PA 66 ou PA 6 / 66, et le polyamide de la couche extérieure (1) est le PA 6 / 66.

7. Procédé de fabrication d'un film multicouche emboutissable et thermorétractable selon l'une quelconque des revendications précédentes concernant le procédé de coextrusion de film à bulles d'air avec un étirage biaxial et thermofixation en trois bulles, **caractérisé en ce qu'**il comprend les étapes suivantes :
a. Coextrusion d'un film ayant une structure et une composition selon la revendication 1, en film tubulaire sous la forme d'une première bulle ;
b. Refroidissement et aplatissement du film tubulaire à une température inférieure à 30°C, avec de l'eau à une température entre 10° et 20°C ;
c. Réchauffement du film tubulaire aplati dans un bain d'eau à une température entre 85° et 98°C;
d. Gonflage et étirement du film tubulaire réchauffé sous la forme d'une deuxième bulle, avec un taux de soufflage compris entre 2,1 et 2,7, et un taux de tirage longitudinal compris entre 2,1 et 2,6 ;
e. Gonflage du film tubulaire sous la forme d'une troisième bulle, pour la thermofixation du film à une température de surface comprise entre 70°C et 85°C, et relaxation du film dans la direction transversale à un taux compris entre 15 à 30 %, et dans la direction longitudinale à un taux compris entre 10 à 20 %.
